# EUROPEAN PATENT APPLICATION

(11) **EP 4 808 189 A1**
(43) Date of publication of application: **16.09.2026**
(21) Application number: 24919327.7
(22) Date of filing: 25.01.2024
(51) Int. Cl.: H04W 24/02

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: FAN, Jiangsheng, Dongguan, Guangdong 523860 (CN)
(74) Representative: Penza, Giancarlo
(86) International application number: PCT/CN2024/074103
(87) International publication number: WO 2025/156218

(57) **Abstract**

The present application provides a wireless communication method, a terminal device, and a network device. The method comprises: a terminal device receives first information sent by a network device. The first information comprises configuration parameters associated with a first model function, and one or more of the following: function identification information associated with the first model function, and one or more pieces of first identification information associated with the first model function. The one or more pieces of first identification information associated with the first model function is/are used for assisting the terminal device in controlling one or more models associated with the first model function. According to the embodiments of the present application, by configuring for a terminal device configuration parameters associated with a first model function and associated auxiliary information (such as function identification information associated with the first model function and/or one or more pieces of first identification information associated with the first model function), the terminal device can accurately select and use a model associated with the first model function, thereby achieving good communication performance.

## Description

### TECHNICAL FIELD

The present disclosure relates to the field of communication technologies, and more specifically, to a wireless communication method, a terminal device, and a network device.

### BACKGROUND

In a conventional communication system, a network device usually configures, based on capability information reported by a terminal device, corresponding basic configuration parameters for the terminal device. With the integration of a communication system and artificial intelligence (AI) technology, how to manage AI models using configuration parameters is an important research direction.

### SUMMARY

The present disclosure provides a wireless communication method, a terminal device, and a network device. Various aspects involved in the present disclosure will be described below.

In a first aspect, there is provided a wireless communication method, which includes the following operation.

A terminal device receives first information transmitted by a network device. Here, the first information includes configuration parameters associated with a first model function, and one or more of: function identification information associated with the first model function, or one or more pieces of first identification information associated with the first model function. Here, the one or more pieces of first identification information associated with the first model function are used to assist the terminal device in controlling one or more models associated with the first model function.

In a second aspect, there is provided a wireless communication method, which includes the following operation.

A network device transmits first information to a terminal device. Here, the first information includes configuration parameters associated with a first model function, and one or more of: function identification information associated with the first model function, or one or more pieces of first identification information associated with the first model function. Here, the one or more pieces of first identification information associated with the first model function are used to assist the terminal device in controlling one or more models associated with the first model function.

In a third aspect, there is provided a terminal device, which includes a first receiving unit.

The first receiving unit is configured to receive first information transmitted by a network device. Here, the first information includes configuration parameters associated with a first model function, and one or more of: function identification information associated with the first model function, or one or more pieces of first identification information associated with the first model function. Here, the one or more pieces of first identification information associated with the first model function are used to assist the terminal device in controlling one or more models associated with the first model function.

In a fourth aspect, there is provided a network device, which includes a first transmission unit.

The first transmitting unit is configured to transmit first information to a terminal device. Here, the first information includes configuration parameters associated with a first model function, and one or more of: function identification information associated with the first model function, or one or more pieces of first identification information associated with the first model function. Here, the one or more pieces of first identification information associated with the first model function are used to assist the terminal device in controlling one or more models associated with the first model function.

In a fifth aspect, there is provided a terminal device, which includes a processor, a memory, and a communication interface. Here, the memory is configured to store one or more computer programs, and the processor is configured to call the computer programs in the memory to cause the terminal device to perform part or all of the operations in the method of the first aspect.

In a sixth aspect, there is provided a network device, which includes a processor, a memory, and a communication interface. Here, the memory is configured to store one or more computer programs, and the processor is configured to call the computer programs in the memory to cause the network device to perform part or all of the operations in the method of the second aspect.

In a seventh aspect, the embodiments of the present disclosure provide a communication system including the above-described terminal and/or network device. In another possible design, the system may further include other devices that interact with the terminal or the network device in the solutions provided by the embodiments of the present disclosure.

In an eighth aspect, the embodiments of the present disclosure provide a computer-readable storage medium storing a computer program that causes a terminal to perform part or all of the operations of the method of the first aspect or the second aspect.

In a ninth aspect, the embodiments of the present disclosure provide a computer program product. Here, the computer program product includes a non-transitory computer-readable storage medium storing a computer program operable to cause a terminal to perform part or all of the operations in the method of the first aspect or the second aspect. In some implementations, the computer program product may be a software installation package.

In a tenth aspect, the embodiments of the present disclosure provide a chip including a memory and a processor. The processor can call and run a computer program from the memory to perform part or all of the operations in the method of the first aspect or the second aspect.

In the embodiments of the present disclosure, by configuring, for the terminal device, configuration parameters associated with a first model function and assistance information associated with the configuration parameters (the assistance information includes function identification information associated with the first model function and/or one or more pieces of first identification information associated with the first model function), the terminal device can accurately select and use a model associated with the first model function, thereby achieving good communication performance.

### BRIEF DESCRIPTION OF THE DRAWINGS

FIG. 1 is a wireless communication system applicable to embodiments of the present disclosure.
FIG. 2 is a flowchart of a wireless communication method provided by an embodiment of the present disclosure.
FIG. 3 is a diagram of a terminal device according to an embodiment of the present disclosure.
FIG. 4 is a diagram of a network device according to an embodiment of the present disclosure.
FIG. 5 is a structural diagram of an apparatus for communication according to an embodiment of the present disclosure.

### DETAILED DESCRIPTION

Hereinafter, technical solutions in the present disclosure will be described with reference to the accompanying drawings.

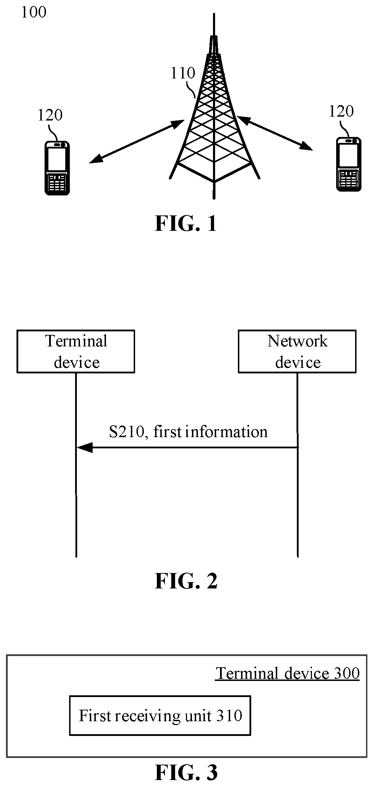

FIG. 1 is a wireless communication system 100 applicable to the embodiments of the present disclosure. The wireless communication system 100 may include a network device 110 and a terminal device 120. The network device 110 may be a device that communicates with the terminal device 120. The network device 110 may provide communication coverage for a particular geographical area and may communicate with the terminal device 120 located within the coverage area.

FIG. 1 illustrates one network device and two terminals as an example. Optionally, the wireless communication system 100 may include multiple network devices, and another number of terminal devices may exist within the coverage area of each network device, which is not limited in the embodiments of the present disclosure.

Optionally, the wireless communication system 100 may further include other network entities such as a network controller and a mobile management entity, which is not limited in the embodiments of the present disclosure.

It should be understood that the technical solutions of the embodiments of the present disclosure can be applied to various communication systems, such as a fifth generation (5G) system or a new radio (NR) system, a long term evolution (LTE) system, an LTE frequency division duplex (FDD) system, an LTE time division duplex (TDD) system. The technical solutions provided by the present disclosure can also be applied to future communication systems, such as a sixth generation mobile communication system, and a satellite communication system.

The terminal device in the embodiments of the present disclosure may also be referred to as user equipment (UE), an access terminal, a user unit, a user station, a mobile station (MS), a mobile terminal (MT), a remote station, a remote terminal, a mobile device, a user terminal, a terminal, a wireless communication device, a user agent, or a user device. The terminal device in the embodiments of the present disclosure may be a device that provides voice and/or data connectivity to a user, and may be used to connect people, objects, and machines, such as a handheld device or vehicle-mounted device with a wireless connection function. The terminal device in the embodiments of the present disclosure may be a mobile phone, a tablet computer (i.e., pad), a notebook computer, a handheld computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in a smart grid, a wireless terminal in transportation safety, a wireless terminal in a smart city, a wireless terminal in a smart home, or the like. Alternatively, the UE may be used to act as a base station. For example, a UE may act as a scheduling entity that provides sidelink signals between UEs in V2X or D2D or the like. For example, a cellular phone and a car communicate with each other using sidelink signals. A cellular phone and a smart home device communicate with each other without relaying communication signals through a base station.

The network device in the embodiments of the present disclosure may be a device for communicating with a terminal device, and the network device may also be referred to as an access network device or a radio access network device, for example, the network device may be a base station. The network device in the embodiments of the present disclosure may refer to a radio access network (RAN) node (or device) that connects a terminal device to a wireless network, a core network device, a model monitoring and management device, an operation administration and maintenance (OAM) device, or the like. The base station may broadly cover, or be replaced with, various names such as a Node B (NodeB), an evolved NodeB (eNB), a next generation NodeB (gNB), a relay station, an access point, a transmitting and receiving point (TRP), a transmitting point (TP), a master eNB (MeNB), a secondary eNB (SeNB), a multi-standard radio (MSR) node, a home base Station, a network controller, an access node, a radio node, an access point (AP), a transmission node, a transceiver node, a base band unit (BBU), a remote radio unit (RRU), an active antenna unit (AAU), a remote radio head (RRH), a central unit (CU), a distributed unit (DU), a centralized unit-control plane (CU-CP), a centralized unit-user plane (CU-UP), and a positioning node. The core network device may broadly cover, or be replaced with, various names such as a location management function (LMF) network element, a network slice selection function (NSSF), an authentication server function (AUSF), a unified data management (UDM), an access and mobility management function (AMF), a session management function (SMF), a policy control function (PCF), a user plane function (UPF), a sensing function (SF), a network data analytics function (NWDAF) network element, and a AI function management entity.

The base station may be a macro base station, a micro base station, a relay node, a donor node, or the like, or a combination thereof. A base station may also refer to a communication module, a modem, or a chip disposed within the aforementioned device or apparatus. The base station may also be a mobile switching center, a device that performs a base station function in device-to-device (D2D), vehicle-to-everything (V2X), or machine-to-machine (M2M) communication, a network-side device in a 6G network, a device that performs a base station function in a future communication system, or the like. The base stations may support networks with the same or different access technologies. The embodiments of the present disclosure do not limit the specific technology and the specific device form adopted by the network device. The base station may be fixed or mobile. For example, a helicopter or a drone may be configured to act as a mobile base station, and one or more cells may move based on a location of the mobile base station. In other examples, a helicopter or drone may be configured to be used as a device for communicating with another base station.

The base station may be fixed or mobile. For example, a helicopter or a drone may be configured to act as a mobile base station, and one or more cells may move based on a location of the mobile base station. In other examples, a helicopter or drone may be configured to be used as a device for communicating with another base station.

In some deployments, the network device in the embodiments of the present disclosure may refer to a CU or a DU, or the network device may include a CU and a DU. The gNB may also include an AAU.

The network device and the terminal device may be deployed on land, including indoors or outdoors, handheld or vehicle-mounted; or can be deployed on water; or can be deployed on aircraft, balloons and satellites in the air. In the embodiments of the present disclosure, the scenarios in which the network device and the terminal device are located are not limited.

It should be understood that all or part of the functions of the communication device in the present disclosure may also be implemented by software functionality running on hardware, or by virtualized functionality instantiated on a platform, such as a cloud platform.

In a conventional communication system, a network device typically configures, based on capability information reported by a terminal device, corresponding basic configuration parameters for the terminal device. For example, the network device may transmit corresponding configuration parameters to the terminal device through a reconfiguration message. As can be seen, the network device usually refers to the basic capability information reported by the terminal device before configuring the parameters, so the configuration parameters included in the reconfiguration message generally do not exceed the basic capability of the terminal device. With the integration of the communication system and AI technology, how to manage AI model(s) using configuration parameters is an important research direction.

In order to solve the above problems, an embodiment of the present disclosure provides a wireless communication method. By configuring, for a terminal device, configuration parameters associated with a first model function, the method helps to realize model management at a model function granularity.

The wireless communication method provided by the embodiment of the present disclosure may include that: a network device transmits first information to a terminal device, or a terminal device receives first information transmitted by a network device. Here, the first information includes configuration parameters associated with a first model function.

The model function mentioned herein can also be replaced with an AI function. The model function may refer to a function implemented by an inference process of a model, such as an AI/machine learning (ML) model. Taking a communication system as an example, the model function may include one or more of: a channel state information (CSI) measurement result compression and feedback function based on model inference, a CSI measurement result time-domain prediction function based on model inference, a beam measurement result spatial-domain prediction function based on model inference, a beam measurement result time-domain prediction function based on model inference, a direct positioning function based on model inference, an indirect positioning function based on model inference, a layer 3 mobility control function based on model inference, a cell beam measurement result spatial-domain prediction function based on model inference, a cell measurement result time-domain prediction function based on model inference, a channel estimation function based on model inference, a joint time-domain, frequency-domain and spatial-domain compression and feedback function for channel state information measurement results based on model inference, a traffic prediction function based on model inference, a resource scheduling function based on model inference, a cell selection and reselection function based on model inference, a random access resource selection function based on model inference, a layer 1 mobility control function based on model inference, a layer 1 measurement control function based on model inference, or the like.

The configuration parameters associated with the first model function refer to configuration parameters that the terminal device needs to use when the first model function is activated.

In some embodiments, the configuration parameters associated with the first model function are dedicated configuration parameters associated with the first model function. Here, the dedicated configuration parameters associated with the first model function can only be used when the first model function is activated. For example, in the conventional communication system (or referred to as a non-AI function scenario, i.e., in a scenario where no model inference function is used), the dedicated configuration parameters associated with the first model function are not used. For another example, when other model functions are activated, the other model functions do not use the dedicated configuration parameters associated with the first model function. In some cases, when a communication system introduces a model function, the protocol defines one or more dedicated configuration parameters for the model function, where the one or more dedicated configuration parameters can only be used when the model function associated with the one or more dedicated configuration parameters is activated.

As an example, in a conventional beam measurement and feedback process, the basic configuration parameters configured by the network device for the terminal device include a reference signal beam pattern A (corresponding to a beam set A). Taking the first model function being a beam measurement result spatial-domain prediction function as an example, the dedicated configuration parameters associated with the first model function include a reference signal beam pattern B (corresponding to a beam set B, and beam identifiers indicated by the set B are not exactly the same as beam identifiers indicated by the set A). If the first information includes the reference signal beam pattern B, the terminal device may implicitly determine that the first model function associated with the first information is the beam measurement result spatial-domain prediction function.

It can be seen that the terminal device can determine the first model function based on the dedicated configuration parameters associated with the first model function, i.e., determine the model function that the network device expects the terminal device to apply, which helps to realize model management based on the granularity of the model function. Further, the terminal device may select and/or activate the model associated with the first model function based on the determined first model function, thereby implementing the corresponding communication function.

In some embodiments, the first information further includes first indication information associated with the first model function, where the first indication information is used to indicate whether to apply the first model function. In some cases, the configuration parameters associated with the first model function are not the dedicated configuration parameters associated with the first model function. For example, when the communication system introduces the first model function, no dedicated configuration parameter is defined for the first model function, or the first model function reuses the configuration parameters of the conventional communication system (e.g., in a non-AI function usage scenario). In this case, whether to apply the first model function can be determined through the first indication information. That is to say, based on the first indication information, it may be determined whether the configuration parameters included in the first information are configured for the first model function (i.e., applying the first model function) or configured for the conventional communication system function (i.e., not applying the first model function, or using a non-AI function). It should be noted that the concepts of applying the first model function and activating the first model function mentioned herein are different. The so-called applying the first model function focuses on that the terminal device chooses to use a model function to implement a communication function. In other words, when the terminal device decides to apply the first model function, it means that the terminal device will not use the non-AI function or conventional non-AI method to implement the corresponding communication function. However, whether the model associated with the first model function is activated cannot be determined based on whether the first model function is applied, but needs to be determined based on additional information (for example, based on a protocol-default predefined manner or based on the explicit indication of other configuration parameters). The so-called activating the first model function focuses on that the terminal device has chosen to apply the model function to implement the communication function, and determines to activate and use the model associated with the first model function. In a case of applying the first model function, the first model function may be activated or temporarily not activated (for example, the first model function may be subsequently activated by other signaling procedures).

Through the first indication information associated with the first model function, in a case where the configuration parameters associated with the model function reuse the configuration parameters of the conventional communication system, it is possible to identify the operation that the network device expects the terminal device to perform: whether to apply the model function, thereby helping the terminal device select an operation suitable for the current network environment or an operation with better performance.

With the development of technology, more and more model functions are introduced into the communication system, and the same model function can also be implemented through multiple models. However, multiple model functions may be associated with the same set of configuration parameters, or, multiple model functions may share the same set of configuration parameters. In addition, multiple models associated with the same model function may differ in performance, or, multiple models associated with the same model function may be applicable to different scenarios or network environments. In this case, how the terminal device selects an appropriate model function or model is a problem that needs to be solved.

In order to solve the above problems, an embodiment of the present disclosure provides another wireless communication method. By configuring, for a terminal device, configuration parameters associated with a first model function and assistance information associated with the configuration parameters (for example, the assistance information includes function identification information associated with the first model function and/or one or more pieces of first identification information associated with the first model function), the terminal device can accurately select and use a model associated with the first model function, thereby achieving good communication performance.

Hereinafter, another wireless communication method provided by the embodiment of the present disclosure will be described with reference to FIG. 2. The method illustrated in FIG. 2 is described from the perspective of interaction between a terminal device and a network device, where the terminal device and the network device may be any type of network device and terminal device mentioned above.

Referring to FIG. 2, in an operation S210, the terminal device receives first information transmitted by the network device. Alternatively, the network device transmits first information to the terminal device.

Here, the first information may include configuration parameters associated with a first model function, and one or more of: function identification information associated with the first model function, or one or more pieces of first identification information associated with the first model function. The one or more pieces of first identification information associated with the first model function are used to assist the terminal device in controlling one or more models associated with the first model function.

The concept of the model function mentioned herein has the same meaning as the aforementioned model function, and will not be repeated here for brevity.

It should be noted that the first model function may include one or more model functions. In other words, the first information may include configuration information associated with one or more model functions. Here, the first information may include only configuration information associated with one model function, and configuration information associated with multiple model functions may be configured through multiple pieces of first information; or the first information may include configuration information associated with multiple model functions. In other words, the configuration information associated with the multiple model functions may be configured through the same first information, or may be configured through different pieces of first information. The present disclosure is not limited to this.

It should be noted that the configuration information associated with the model function mentioned herein may include configuration parameters associated with the model function, as well as function identification information associated with the model function and/or one or more pieces of first identification information associated with the model function. For example, the configuration information associated with the first model function may refer to the first information.

In some embodiments, the first information may include function identification information associated with the first model function. Here, each piece of function identification information is associated with one model function, or model functions are associated with pieces of function identification information in a one-to-one manner. Since the configuration parameters associated with the first model function may also be associated with other model functions, or the configuration parameters may be associated with multiple model functions, the function identification information may assist the terminal device in determining the first model function required to be applied.

For example, configuration information of a reference signal beam pattern is applicable to both a beam measurement result spatial-domain prediction function based on model inference and a beam measurement result time-domain prediction function based on model inference. Taking the configuration information of the reference signal beam pattern being the configuration parameters associated with the first model function as an example, based on the configuration parameters associated with the first model function included in the first information, it cannot be determined whether the model function that the network device expects the terminal device to apply is the beam measurement result spatial-domain prediction function based on model inference or the beam measurement result time-domain prediction function based on model inference. In this case, if the first information includes the function identification information associated with the first model function, the terminal device may determine, based on the function identification information, that the model function that the network device desires to configure is the first model function.

In addition, if the configuration parameters associated with the first model function reuse the configuration parameters in the conventional system, and the first information includes the function identification information associated with the first model function, the terminal device may implicitly determine, based on the function identification information, that the first model function is required to be applied.

In some embodiments, the function identification information may be indicated by the value of one or more bits. The present disclosure does not limit the number of bits actually included in the one or more bits. For example, a value of the function identification information is '00', which may indicate configuring the beam measurement result spatial-domain prediction function based on model inference; the value of the function identification information is '01', which may indicate configuring the beam measurement result time-domain prediction function based on model inference; the value of the function identification information is '10', which may indicate configuring the beam measurement result spatial-domain and time-domain prediction functions based on model inference. It should be noted that the association relationship between the values of the function identification information and the model functions is provided herein only as an example. It should be understood that the association relationship between the values of the function identification information and the model functions may also include other situations, and the present disclosure is not limited thereto.

In some embodiments, the first information may include one or more pieces of first identification information associated with the first model function. The one or more pieces of first identification information associated with the first model function are associated with one or more models, where the first model function can be implemented through model inference of the one or more models. The one or more models may also be referred to as model(s) associated with the first model function.

In some embodiments, the one or more pieces of first identification information associated with the first model function are used to assist the terminal device in controlling the one or more models associated with the first model function. In other words, the one or more pieces of first identification information associated with the first model function are used to distinguish or identify the one or more models associated with the first model function. Further, the terminal device may control the model(s) associated with the first model function based on the first identification information, where "control" mentioned herein may be understood as "activate", "switch", "match", "select", "screen", "filter", "deactivate", "exclude", or the like.

For the first model function, the terminal device may deploy different models. Since the multiple models associated with the first model function are usually models of different categories, such as models associated with characteristics of different training datasets, the multiple models associated with the first model function may also be referred to as models of different categories or different classifications associated with the first model function. Although these models of different classifications can all operate under the configuration parameters associated with the first model function, these models of different classifications have different operating performances. This is because the characteristics of the datasets associated with these models of different classifications are different or not exactly the same.

For example, the multiple models associated with the first model function may be associated with data characteristics of different model training datasets, where the data characteristics of the model training dataset are typically associated with a configuration environment of the terminal device and/or a configuration environment of the network device. As an example, the model training dataset associated with the first model function includes four kinds of data characteristics, where the first two kinds of data characteristics are associated with the configuration environment of the terminal device and the other two kinds of data characteristics are associated with the configuration environment of the network device, or each of the models of different classifications associated with the first model function is associated with a specific network device configuration environment.

However, for reasons such as security and commercial considerations, the terminal device usually cannot directly obtain information about the configuration environment of the network device. Therefore, the configuration parameters associated with the first model function can only reflect a part of the characteristics of the model training dataset. In this case, based on the configuration parameters associated with the first model function (for example, the configuration parameters are dedicated configuration parameters associated with the first model function), the terminal device can only determine the first model function, but cannot determine an appropriate classified model among models of multiple categories associated with the first model function, e.g., cannot determine a classified model with the best performance in the current communication environment.

Based on this, in some embodiments, the first identification information may be associated with the characteristics of the model training dataset, e.g., the first identification information associated with characteristics of different model training datasets has different values. For example, the model training datasets with different characteristics associated with the first model function may be distinguished by associating them with the first identification information with different values. Based on the first identification information associated with the first model function, a model screening function can be realized in the models of multiple categories associated with the first model function, thereby assisting the terminal device in selecting an appropriate category of model under a specific model function, and further realizing good model function performance in a specific communication environment.

In some embodiments, the first identification information is a mandatory parameter for model function configuration. For example, when configuring the first model function, the first identification information associated with the first model function needs to be configured. In other words, if the network device is ready to configure the first model function in one configuration process, the network device, when configuring, needs to provide the first identification information associated with the first model function. On one hand, the first identification information associated with the first model function may assist the terminal device in controlling the one or more models associated with the first model function, such as selecting a target model. On the other hand, the first identification information associated with the first model function may indicate that the first model function is to be applied. For example, in a case where the configuration parameters associated with the first model function are not dedicated configuration parameters associated with the first model function, the first identification information may indicate that the first model function is to be applied.

In some embodiments, the first identification information is an optional parameter for model functional configuration.

For example, the first identification information is defined as a need M optional parameter. That is to say, the UE needs to determine the value of the first identification information when the first identification information is absent (or not configured), e.g., continuing to use the value of the first identification information configured last time. For example, in one configuration process, if the first identification information is not configured (or the first identification information does not appear), in this configuration process, the value of the first identification information is the first identification information configured last time, or the model is processed based on the value of the first identification information previously maintained by the terminal device, such as performing model screening.

For another example, the first identification information is defined as a need S optional parameter. That is to say, in one configuration process, when the first identification information parameter does not appear, if the configuration parameters associated with the model function (i.e., the model function associated with the first identification information) are dedicated configuration parameters associated with the model function, the terminal device considers that any model locally deployed and associated with the model function can be used; if the configuration parameters associated with the model function (i.e., the model function associated with the first identification information) are not dedicated configuration parameters associated with the model function, the terminal device considers that the network device has no intention to activate the corresponding model function or that the model function is not to be applied (in this case, the terminal device uses the non-AI function for communication).

In some embodiments, the first information may include configuration parameters associated with the first model function, as well as function identification information associated with the first model function and/or first identification information associated with the first model function.

The above two wireless communication methods provided by the embodiments of the present disclosure may be used independently or in combination with each other. In different scenarios, the first information may include different contents. Hereinafter, taking the first model function including one model function as an example, the contents included in the first information will be illustratively described. It should be understood that the first information may also include more contents, and the present disclosure is not limited thereto.

In a case where the configuration parameters associated with the first model function are dedicated configuration parameters associated with the first model function, the first information may include only the configuration parameters associated with the first model function. In this configuration mode, the terminal device can determine which model function to apply through the dedicated configuration parameters.

In a case where the configuration parameters associated with the first model function are dedicated configuration parameters associated with the first model function, if there is more than one model category associated with the corresponding model function, the first information may include the configuration parameters associated with the first model function and the one or more pieces of first identification information associated with the first model function. In this configuration mode, the terminal device can first determine to apply the first model function based on the dedicated configuration parameters associated with the first model function; and further, the one or more pieces of first identification information associated with the first model function can assist the terminal device in performing model category screening, in other words, the terminal device can select a valid model associated with the first model function based on the one or more pieces of first identification information included in the first information. The valid model mentioned herein can be understood as a model that the network device expects the terminal device to adopt, or a model with better performance in the current scenario, or a model whose performance in the current scenario is better than that of other models associated with the first model function.

In a case where the configuration parameters associated with the first model function are dedicated configuration parameters associated with the first model function, the first information may include the configuration parameters associated with the first model function and the function identification information associated with the first model function, thereby facilitating the execution of operations related to model management, such as model activation, model deactivation, model switching. In this configuration mode, the function identification information is not intended to distinguish between model functions, because the terminal device can already determine which model function to apply based on the dedicated configuration parameters. The additional provision of the function identification information is intended to facilitate the subsequent rapid execution of the operations related to model management using the function identification information, such as rapidly performing operations such as model activation, model deactivation, or model switching using a media access control control element (MAC CE) or downlink control information (DCI) signaling.

In a case where the configuration parameters associated with the first model function are dedicated configuration parameters associated with the first model function, the first information may include the configuration parameters associated with the first model function, the function identification information associated with the first model function, and the one or more pieces of first identification information associated with the first model function. In this configuration mode, the function identification information is not intended to distinguish between model functions, because the terminal device can already determine which model function to apply based on the dedicated configuration parameters. The additional provision of the function identification information is intended to facilitate the subsequent rapid execution of the operations related to model management using the function identification information. The one or more pieces of first identification information associated with the first model function can assist the terminal device in performing model category screening, or in other words, the terminal device can select a valid model associated with the first model function based on the one or more pieces of first identification information included in the first information.

In a case where the configuration parameters associated with the first model function are not dedicated configuration parameters associated with the first model function, if the configuration parameters associated with the first model function reuse the configuration parameters of the conventional non-AI communication system, whether the first model function is to be applied cannot be determined based only on the configuration parameters. Therefore, additional indication information is required to assist the terminal device in determining the model function to be applied.

For example, the first information may include the configuration parameters associated with the first model function and the aforementioned first indication information.

For another example, in addition to the configuration parameters associated with the first model function, the first information may further include the function identification information associated with the first model function and/or the one or more pieces of first identification information associated with the first model function.

As an example, when the configuration parameters included in the first information are associated only with the first model function, the first information may further include the one or more pieces of first identification information associated with the first model function. In this case, the one or more pieces of first identification information associated with the first model function included in the first information have two meanings. The first meaning indicates that the network device expects to apply the model function rather than applying a conventional communication method (such as a non-AI function), because the first identification information is information used only when the model function is applied. Since the configuration parameters are associated with one model function, the terminal device can uniquely determine the model function required to be applied. The second meaning indicates that the network device expects the terminal device to perform a model category screening operation on the model(s) deployed on the terminal device and associated with the first model function, based on the one or more pieces of first identification information included in the first information.

As another example, when the configuration parameters included in the first information are also associated with other model functions, the first information may include the configuration parameters associated with the first model function and the function identification information associated with the first model function. In this case, the function identification information associated with the first model function may, on the one hand, be used to indicate that the model function is to be applied rather than a conventional communication method (such as a non-AI function), and may, on the other hand, assist the terminal device in determining which model function to apply.

As yet another example, in a case where the configuration parameters included in the first information are also associated with other model functions, if the first model function is associated with multiple model categories, the first information may include the configuration parameters associated with the first model function, the function identification information associated with the first model function, and the one or more pieces of first identification information associated with the first model function. Here, the function identification information included in the first information may assist the terminal device in determining the model function to be applied and/or may be used for subsequent execution of the operations related to model management, and the one or more pieces of first identification information may assist the terminal device in selecting a valid model.

In a case where the configuration parameters associated with the first model function are not dedicated configuration parameters for the first model function, if the configuration parameters associated with the first model function are only associated with the model functions (i.e., the configuration parameters of the conventional communication system are not reused, or the configuration parameters associated with the first model function are associated with multiple model functions), the first information may include the configuration parameters associated with the first model function and the function identification information associated with the first model function, or the first information may include the configuration parameters associated with the first model function, the function identification information associated with the first model function, and the one or more pieces of first identification information associated with the first model function. For example, when the first model function is associated with only one category of model, the first information may include only the function identification information associated with the first model function to assist the terminal device in determining the model function to be applied. Further, the first information may further include the first identification information associated with the first model function, and in this case, the first identification information included in the first information is used to assist the terminal device in performing a model category screening operation on the model deployed on the terminal device and associated with the first model function. For another example, when the first model function is associated with multiple categories of models, the first information may include the configuration parameters associated with the first model function, the function identification information associated with the first model function, and the one or more pieces of first identification information associated with the first model function. In this case, the function identification information included in the first information may be used to determine the first model function to be applied, and used to subsequently perform the operations related to model management; and the one or more pieces of first identification information included in the first information are used to assist the terminal device in performing a model category screening operation on the models deployed on the terminal device and associated with the first model function.

In some embodiments, the terminal device may determine a model set associated with the first model function based on the first information. For example, if the first model function is associated with multiple models, the terminal device may determine a model set associated with the first model function based on the function identification information associated with the first model function and the one or more pieces of first identification information associated with the first model function, or based on the one or more pieces of first identification information associated with the first model function.

In the embodiments of the present disclosure, by providing the terminal device with assistance information for model control (e.g., the first identification information mentioned above), the network device can avoid directly controlling the specific models deployed on the terminal device. On the one hand, the methods provided by the embodiments of the present disclosure help to simplify the model management operations of the network device, for example, the models deployed on the terminal device may not be managed at a model granularity. On the other hand, the methods provided by the embodiments of the present disclosure help to improve the flexibility of the terminal device in performing model control, because if there are multiple models, that meet the configuration requirements of the network device, among the models deployed on the terminal device and associated with the model function, the terminal device can flexibly select a model suitable for the current communication environment based on the implementation, which leaves a flexible space for the implementation of the terminal device.

For example, the network device may manage the models deployed on the terminal device side only from a functional level. For functional requirements provided by the network device (for example, the network device provides the terminal device with one or more pieces of first identification information associated with the model function), the terminal device may deploy multiple models that meet the functional requirements of the network device. In this case, the terminal device can autonomously choose to use one of the models that meet the functional requirements of the network device, and even freely switch between multiple AI models that meet the functional requirements of the network device. Moreover, since these models all meet the model functional requirements currently provided by the network device, the network device may not be aware of the model switching process of the terminal device.

It can be seen that the methods provided by the embodiments of the present disclosure help to avoid the situation where the terminal device cannot correctly select the model with the best working performance in the current network environment, thereby helping to avoid the occurrence of system performance degradation caused by the terminal device selecting an inappropriate model. In addition, the methods can simplify the model management operations of the network device while helping to improve the flexibility of terminal devices in model selection.

In some embodiments, upon receiving the first information, the terminal device may determine whether to activate the first model function associated with the first information in a default manner (e.g., determine in a protocol-predefined manner).

For example, the default manner may be deactivation. That is to say, when the terminal device successfully receives the first information, the terminal device may save the information included in the received first information, but temporarily not activate the first model function, i.e., temporarily not activate any model associated with the first model function. By adopting this default manner, on the one hand, some evaluation time can be reserved for the network device, so as to determine the appropriate conditions and timing for activating the first model function, thereby avoiding the communication system performance degradation caused by blindly activating the first model function; on the other hand, by configuring the first information for the terminal device in advance, a configuration basis is also provided for using other signaling, such as MAC CE or DCI signaling, to quickly activate or deactivate the first model function or quickly switch the model associated with the first model function, since the MAC CE or DCI signaling typically cannot directly provide configuration information due to capacity limitations.

For another example, the default manner may be activation. That is to say, when the terminal device successfully receives the first information, the terminal device may activate the first model function, e.g., immediately activates and uses the configuration included in the first information, and activates a valid model associated with the first model function based on all or part of the configuration information included in the first information. If the first information includes the configuration parameters associated with the first model function and the one or more pieces of first identification information associated with the first model function, the terminal device may select a valid model based on the one or more pieces of first identification information.

From the perspective of the terminal device, the default activation manner is adopted, so that the terminal device does not need to cache the information associated with the first model function, thus facilitating implementation. From the perspective of the network device, the default activation manner is adopted, so that the implementation of activation management operation of the model function is relatively simple.

In some embodiments, the default manner may be predefined or preconfigured.

In the embodiments of the present disclosure, determining, in the default manner, whether to activate the first model function can simplify the model management process and save signaling overhead.

In some embodiments, the terminal device may determine whether to activate the first model function through indication information. For example, the terminal device receives second information transmitted by the network device, or the network device transmits second information to the terminal device. The second information is used to indicate whether the terminal device is to activate the first model function upon receiving the first information. If a value of the second information means "to activate", the terminal device activates the first model function, e.g., immediately activates and uses the configuration included in the first information, and activates a valid model associated with the first model function based on part or all of the configuration information in the first information. If the value of the second information means "not to activate", the terminal device stores the configuration information included in the successfully received first information, but temporarily not activate the first model function, i.e., not activate any model associated with the first model function. If the first information includes the configuration parameters associated with the first model function and the one or more pieces of first identification information associated with the first model function, the terminal device may select a valid model based on the one or more pieces of first identification information.

In some embodiments, the second information may be carried in the first information, or the first information may include the second information.

In the embodiments of the present disclosure, by using the second information to indicate whether the terminal device is to activate the first model function upon receiving the first information, the network device can determine, based on the current communication state, whether the first model function is to be activated, thereby helping to improve the flexibility of the system.

In some embodiments, the first information or the second information may be carried in a radio resource control (RRC) signaling.

After configuring the first information, the terminal device may perform management on the model function(s), such as activating the first model function, deactivating the first model function, and switching a model associated with the first model function. Various management methods for model function(s) are introduced below.

In some embodiments, the first model function includes one or more model functions, and the terminal device receives third information transmitted by the network device, where the third information is used to indicate any one of: activating the one or more model functions, deactivating the one or more model functions, or switching model(s) associated with the one or more model functions.

That is to say, the one or more model functions may be managed using the same signaling format, or signaling with the same format, such as the same type of MAC CE or DCI. The model function management mentioned herein may include model function activation, model function deactivation, model function switching, and the like. Accordingly, in some embodiments, the third information may further include a first indication field for indicating which management operation the third information is used to perform on the one or more model functions. For example, each management operation may be associated with one value of the first indication field, or multiple management operations may be associated with one value of the first indication field.

As an example, if a value of the first indication field is a first value, the third information is used to activate the one or more model functions or to switch the model(s) associated with the one or more model functions; if the value of the first indication field is a second value, the third information is used to deactivate the one or more model functions.

It can be seen that based on the value of the first indication field, it cannot be determined whether the third information is used to activate the one or more model functions or to switch the model(s) associated with the one or more model functions. In this case, the terminal device may determine which management operation the third information is used to perform based on whether the model function(s) associated with the third information are currently in an activated state. Here, the model function(s) associated with the third information may be determined based on the function identification information included in the third information (i.e., the function identification information associated with the first model function).

For example, if the one or more model functions are in a deactivated state, the third information is used to activate the one or more model functions, such as deactivating the non-AI functions on the one hand and activating the one or more model functions on the other hand.

For another example, if the one or more model functions are in an activated state, the third information is used to switch the model(s) associated with the one or more model functions, e.g., deactivating the model currently used by each of the one or more model functions on the one hand, and activating another model associated with each of the one or more model functions on the other hand. The another model associated with each of the one or more model functions mentioned herein may be determined based on the third information, e.g., being determined based on first identification information associated with the one or more models included in the third information.

As another example, if a value of the first indication field is a first value, the third information is used to activate the one or more model functions; if the value of the first indication field is a second value, the third information is used to deactivate the one or more model functions; if the value of the first indication field is a third value, the third information is used to switch the model(s) associated with the one or more model functions.

In some embodiments, if the third information is used to activate the one or more model functions, the third information includes function identification information associated with the one or more model functions, or the third information includes function identification information associated with the one or more model functions and first identification information associated with the one or more model functions.

In a case where the third information includes the function identification information associated with one or more model functions, since the terminal device has obtained configuration information associated with the one or more model functions (e.g., the first information) before receiving the third information, the terminal device, upon receiving the third information, can activate the corresponding model function(s) based on the model function identification information included in the third information. If the configuration information associated with the one or more model functions (e.g., the first information) includes one or more pieces of first identification information associated with the one or more model functions, before activating the model(s) associated with the one or more model functions, the terminal device needs to select valid model(s) based on the one or more pieces of first identification information associated with the one or more model functions. Taking the third information including the function identification information associated with the first model function as an example, if the first information includes the one or more pieces of first identification information associated with the first model function, before activating the first model function, the terminal device needs to select a valid model based on the one or more pieces of first identification information associated with the first model function. Further, the terminal device may activate the selected valid model. Of course, if there is only one model associated with the each of the one or more model functions activated by the third information (activation of the one or more model functions is indicated by the third information including the function identification information associated with the one or more model functions), then the terminal device may directly activate the model associated with the corresponding model function.

In a case where the third information includes the function identification information associated with the one or more model functions and the first identification information associated with the one or more model functions, the terminal device may select valid model(s) associated with the one or more model functions based on the function identification information and the first identification information included in the third information. Further, the terminal device may activate the selected valid model(s).

In some embodiments, if the third information is used to deactivate the one or more model functions, the third information includes function identification information associated with the one or more model functions. Upon receiving the third information, the terminal device can determine a model set associated with one or more model functions based on the model function identification information included in the third information, and then activate all models in the model set. It can be seen that the third information only needs to include the function identification information associated with the model function(s) to realize the deactivation of the corresponding model function(s), which is convenient for implementation.

In some embodiments, if the third information is used to switch the model(s) associated with the one or more model functions, the third information includes function identification information associated with the one or more model functions and first identification information associated with the one or more model functions. In this case, the terminal device may select valid model(s) based on the third information, and switch low-performance model(s) associated with the one or more model functions to the valid model(s) associated with the one or more model functions.

In the embodiments of the present disclosure, by performing model function management using signaling with the same definition or the same format, it is possible to avoid introducing multiple types of signaling, thereby reserving more protocol extension space.

In some embodiments, the first model function includes one or more model functions, and the terminal device receives fourth information transmitted by the network device, or the network device transmits fourth information to the terminal device. The fourth information may be used to activate the one or more model functions; or, the fourth information may be used to switch model(s) associated with the one or more model functions.

It can be seen that model function activation and model switching use signaling with the same definition or the same format, i.e., signaling of the same format.

Accordingly, in some embodiments, the fourth information may include a second indication field. If a value of the second indication field is a first value, the fourth information is used to activate the one or more model functions; if the value of the second indication field is a second value, the fourth information is used to switch the model(s) associated with the one or more model functions. In other embodiments, whether the fourth information is used to activate the one or more model functions or to switch the model(s) associated with the one or more model functions may be determined based on the current state of the one or more model functions associated with the fourth information, and in this implementation, the fourth information does not need to include the second indication field.

For example, if the one or more model functions associated with the fourth information are in a deactivated state, the fourth information is used to activate the one or more model functions, such as deactivating the non-AI functions on the one hand and activating the one or more model functions on the other hand.

For another example, if the one or more model functions associated with the fourth information are in an activated state, the fourth information is used to switch the model(s) associated with the one or more model functions, e.g., deactivating the model currently used by each of the one or more model functions on the one hand, and activating another model associated with each of the one or more model functions on the other hand. The another model associated with each of the one or more model functions mentioned herein may be determined based on the fourth information, e.g., being determined based on first identification information associated with the one or more models in the fourth information.

In some embodiments, if the fourth information is used to activate the one or more model functions, the fourth information includes function identification information associated with the one or more model functions, or the fourth information includes function identification information associated with the one or more model functions and first identification information associated with the one or more model functions.

In a case where the fourth information includes the function identification information associated with one or more model functions, since the terminal device has obtained configuration information associated with the one or more model functions (e.g., the first information) before receiving the fourth information, the terminal device, upon receiving the fourth information, can activate the corresponding model function(s) based on the model function identification information included in the fourth information. If the configuration information associated with the one or more model functions (e.g., the first information) includes one or more pieces of first identification information associated with the one or more model functions, before activating the model(s) associated with the one or more model functions, the terminal device needs to select valid model(s) based on the one or more pieces of first identification information associated with the one or more model functions. Taking the fourth information including the function identification information associated with the first model function as an example, if the first information includes the one or more pieces of first identification information associated with the first model function, before activating the first model function, the terminal device needs to select a valid model based on the one or more pieces of first identification information associated with the first model function. Further, the terminal device may activate the selected valid model. Of course, if there is only one model associated with the each of the one or more model functions activated by the fourth information (activation of the one or more model functions is indicated by the fourth information including the function identification information associated with the one or more model functions), then the terminal device may directly activate the model associated with the corresponding model function.

In a case where the fourth information includes the function identification information associated with the one or more model functions and the first identification information associated with the one or more model functions, the terminal device may select valid model(s) associated with the one or more model functions based on the function identification information and the first identification information included in the fourth information. Further, the terminal device may activate the selected valid model(s).

In some embodiments, if the fourth information is used to switch the model(s) associated with the one or more model functions, the fourth information includes function identification information associated with the one or more model functions and first identification information associated with the one or more model functions. In this case, the terminal device may select valid model(s) based on the fourth information, and switch low-performance model(s) associated with the one or more model functions to the valid model(s) associated with the one or more model functions.

In some embodiments, the first model function includes one or more model functions, and the terminal device receives fifth information transmitted by the network device, or the network device transmits fifth information to the terminal device. The fifth information may be used to deactivate the one or more model functions. That is to say, the model function(s) may be deactivated using independently defined signaling or signaling of an independent format, or the information for deactivating the model function(s) and the information for activating the model function(s) are signaling with different formats or different definitions.

In some embodiments, the fifth information includes function identification information associated with the one or more model functions, where the one or more model functions include the first model function associated with the first information. Upon receiving the fifth information, the terminal device may determine a model set associated with the one or more model functions based on the model function identification information included in the fifth information, and further activate all models in the model set. It can be seen that the fifth information only needs to include the function identification information associated with the model function(s) to realize the deactivation of the corresponding model function(s), which is convenient for implementation.

In the process of model function management, the embodiments of the present disclosure realizes model function activation, model function deactivation and model switching by using signaling with different definitions or different formats, so that the functional definitions of signaling are clearer, and the design logic of the protocol is also simplified.

It should be noted that the information for managing the model function(s), such as the first identification information associated with the one or more model functions included in the third information, the fourth information, or the fifth information, belongs to a subset of the first identification information set associated with the one or more model functions included in the configuration information (the configuration information associated with the one or more model functions). For example, the first identification information associated with the first model function included in the fourth information belongs to a subset of one or more pieces of first identification information associated with the first model function included in the first information. As an example, the first information includes three pieces of first identification information (00, 01, 10) associated with the first model function, and the fourth information includes one piece of first identification information (10) associated with the first model function. It can be seen that the first identification information associated with the first model function included in the fourth information is a subset of the first identification information set associated with the first model function included in the first information.

It should be noted that the above methods for one or more model functions are applicable to scenarios in which the model function management information (e.g., the third information, the fourth information, and the fifth information mentioned above) includes the function identification information associated with the one or more model functions.

In some embodiments, the first model function includes one or more model functions, and the terminal device receives sixth information transmitted by the network device, or the network device transmits sixth information to the terminal device. The sixth information may be used to activate or deactivate the one or more model functions. By performing model function management using signaling with the same definition or the same format, it is possible to avoid introducing multiple types of signaling, thereby reserving more protocol extension space.

In some embodiments, the sixth information may include a third indication field, where the third indication field includes one or more bits (or a bit string), the one or more bits are associated with the one or more model functions, and the one or more model functions include the first model function. In other words, each of the one or more bits is associated with a respective model function. Based on this, the sixth information may be used to perform management operations on the multiple model functions, that is, perform batch processing on the multiple model functions, thereby helping to save signaling overhead.

In some embodiments, different values of each bit may correspond to different meanings. In some embodiments, if a value of the bit is a first value, the sixth information is used to activate the model function associated with the bit; if the value of the bit is a second value, the sixth information is used to deactivate the model function associated with the bit. Through different values of bits in the bit string, the sixth information can be used to perform different operations on the multiple model functions, such as deactivating a part of the model functions and activating a part of the model functions, thus helping to further save signaling overhead.

For example, the third indication field includes two bits (a first bit and a second bit), where the first bit and the second bit are associated with a first model function and a second model function, respectively. If a value of the first bit is a first value, the sixth information is used to activate the first model function; if the value of the first bit is a second value, the sixth information is used to deactivate the first model function. If a value of the second bit is the first value, the sixth information is used to activate the second model function; if the value of the second bit is the second value, the sixth information is used to deactivate the second model function. As can be seen, one piece of sixth information may be used to perform the same operation or different operations on the first model function and the second model function.

In a case where the sixth information is used to activate the first model function, if the first information includes one or more pieces of first identification information associated with the first model function, a valid model may be selected based on the one or more pieces of first identification information associated with the first model function. Further, the terminal device may activate the selected valid model.

As previously mentioned, the one or more bits included in the third indication field are associated with the one or more model functions. Here, an association relationship between the one or more bits and the one or more model functions may be determined based on various manners.

In some embodiments, the association relationship between the bit(s) in the bit string and the model function(s) is determined based on the order in which the configuration information associated with the model function(s) appears. For example, the network device configures, for the terminal device, the configuration information associated with three model functions, and the configuration information appears in the order of: configuration information 1 associated with model function 1, configuration information 2 associated with model function 2, and configuration information 3 associated with model function 3. Then, at least three bits are included in the bit string, here, the first bit is associated with the model function 1, the second bit is associated with the model function 2, and the third bit is associated with the model function 3.

In some embodiments, the association relationship between the bit(s) in the bit string and the model function(s) is determined based on the order in which the function identification information associated with the model function(s) appears. The explanation of the meaning of this manner is similar to that of the foregoing manner of determining based on the order in which the configuration information associated with model function(s) appears, and will not be repeated here for simplicity.

In some embodiments, the association relationship between the bit(s) in the bit string and the model function(s) is determined based on the order in which the first identification information associated with the model function(s) appears. If a model function is associated with multiple pieces of first identification information, the association relationship between the bit(s) in the bit string and the model function(s) may be determined based on the order in which the fixed-order first identification information (e.g., the first piece of first identification information) associated with the model function(s) appears. The explanation of the meaning of this manner is similar to that of the foregoing manner of determining based on the order in which the configuration information associated with model function(s) appears, and will not be repeated here for simplicity.

In some embodiments, the aforementioned third information, fourth information, fifth information, and sixth information may be carried in MAC CE or DCI. In the embodiments of the present disclosure, by using the MAC CE or DCI for model function management, it helps to reduce the duration of the model management process and reduce the signaling overhead.

Taking information for managing model function(s) (e.g., the third information, the fourth information, the fifth information, and the sixth information) being carried on MAC CE or DCI as an example, the third information may be a first type of MAC CE or DCI, the fourth information may be a second type of MAC CE or DCI, the fifth information may be a third type of MAC CE or DCI, and the sixth information may be a fourth type of MAC CE or DCI.

As mentioned above, the model function management may be performed based on the configuration information associated with the model function(s), or the model function management may be performed through information for managing the model function(s), such as the third information, the fourth information, the fifth information, and the sixth information. In some embodiments, the two methods for model function management may be used in combination. Hereinafter, taking the first information in the configuration information associated with the model function(s) as an example, different combinations of the two methods for the model function management will be described.

In some embodiments, the configuration information associated with the first model function is configured for the terminal device through the first information. Upon receiving the first information, the terminal device may save the corresponding configuration information, but temporarily not activate the first model function. The terminal device may determine whether to activate or deactivate the first model function, or to switch the model associated with the first model function, based on subsequently received information for managing the model function (e.g., any one of the third information and the sixth information, or any one of the fourth information and the fifth information). It should be understood that the subsequent model function activation, deactivation, and model function-associated model switching may also be indicated by the above-described information for managing the model function. It should be noted that if the network device reconfigures the configuration information associated with the model function, the above-described operations may be repeatedly performed.

In some embodiments, the configuration information associated with the first model function is configured for the terminal device through the first information. Upon receiving the first information, the terminal device may save the corresponding configuration information and immediately activate the first model function. The terminal device may determine whether to deactivate the first model function or switch the model associated with the first model function, based on subsequently received information for managing the model function (e.g., any one of the third information and the sixth information, or any one of the fourth information and the fifth information). It should be understood that the subsequent model function activation, deactivation, and model function-associated model switching may also be indicated by the above-described information for managing the model function. It should be noted that if the network device reconfigures the configuration information associated with the model function, the above-described operations may be repeatedly performed.

In some embodiments, the configuration information associated with the first model function is configured for the terminal device through the first information. Upon receiving the first information, the terminal device may save the corresponding configuration information and determine whether to activate the first model function based on the second information. The subsequent model function activation, deactivation, and model switching associated with the model function may also be indicated by the above-described information for managing the model function. It should be noted that if the network device reconfigures the configuration information associated with the model function, the above-described operations may be repeatedly performed.

In a case where the configuration information associated with the model function (e.g., the first information) is carried in an RRC message and the model function management information is carried in a MAC CE or a DCI, the combination of the above two methods for model function management not only makes full use of the advantage that the RRC message can configure the parameters in advance, but also takes advantage of the fact that the model function management via MAC CE or DCI (compared to RRC process) has a shorter duration and lower signaling overhead.

It should be noted that the model function management method in which the default manner is deactivation must be used in combination with the above-described information for managing the model function. The model management method in which the default manner is activation, and the model management method in which whether to activate is determined via an additional indication field, can each be used independently or in combination with the above-described information for managing the model function, and the present disclosure is not limited thereto.

Since a protocol layer (e.g., RRC protocol layer) for managing the model functions may be different from a protocol layer (e.g., MAC protocol layer or physical layer) for receiving the information for model function management, when the terminal device receives the information for model function management, the terminal device may need to perform some inter-protocol-layer interaction operations (referred to as inter-layer interaction operations) to realize the management of the model functions.

In some embodiments, the inter-layer interaction operations involves transmission of information associated with the model function, such as delivering the information associated with the model function to the protocol layer that manages the model function. For example, when the configuration parameters associated with the first model function are associated with multiple model functions, the function identification information associated with the first model function may be delivered to the protocol layer that manages the first model function. For another example, when the configuration parameters associated with the first model function are associated with multiple models, the function identification information associated with the first model function, or both the function identification information associated with the first model function and the first identification information associated with the first model function may be delivered to the protocol layer that manages the first model function.

From a perspective of model management, the information content delivered to the protocol layer that manages the model function may be determined based on an operation that needs to be performed on the model function. Hereinafter, taking the first model function being a model function managed by a first protocol layer of the terminal device as an example, the above-described inter-layer interaction operations will be introduced.

In some embodiments, when a second protocol layer receives information for activating the first model function, the terminal device delivers the function identification information associated with the first model function to the first protocol layer, or the terminal device delivers the function identification information associated with the first model function and the first identification information associated with the first model function to the first protocol layer. Further, the first protocol layer may determine, based on the model function identifier associated with the first model function, that the first model function needs to be activated. If the information delivered to the first protocol layer includes the first identification information associated with the first model function, the first identification information may be used to select a valid model associated with the first model function. Further, the first protocol layer may activate the selected valid model.

In some embodiments, when the second protocol layer receives information for deactivating the first model function, the terminal device delivers the function identification information associated with the first model function to the first protocol layer. Further, the first protocol layer may determine, based on the model function identifier, a model function required to be deactivated.

In some embodiments, when the second protocol layer receives information for switching a model associated with the first model function, the terminal device delivers the function identification information associated with the first model function and the first identification information associated with the first model function to the first protocol layer. The first protocol layer may determine, based on the function identification information associated with the first model function, that the first model function is one on which a model switching operation is required to be performed, and deactivate a currently activated model among the model(s) associated with the first model function, and activate a valid model associated with the first model function based on the first identification information delivered by the second protocol layer. Here, the valid model is selected by the first protocol layer based on the first identification information delivered by the second protocol layer.

In some embodiments, the first protocol layer is an upper protocol layer of the second protocol layer.

In some embodiments, the first protocol layer may be, for example, an RRC protocol layer, or a non-access stratum (NAS) layer, or an application layer; and the second protocol layer may be, for example, a media access control (MAC) layer or a physical (PHY) layer.

The embodiments of the present disclosure can manage models deployed on terminal device, such as AI/ML models, based on a model function granularity. In this way, the network device does not need to know the specific situation of each model deployed on the terminal device, but only needs to perform model management at a model function level. Therefore, the methods can avoid the complexity caused by the network device directly managing the models deployed on the terminal device at a model granularity. In addition, managing the models deployed on the terminal device based on the model function granularity can reserve a degree of freedom at the implementation level for the model selection process performed by the terminal device (the terminal device can autonomously select, from among multiple model types deployed on the terminal device, a model that matches the first identification information provided by the network device), while avoiding the terminal device from exposing all design details of each model deployed on the terminal device to the network device, thus protecting the commercial privacy of the terminal device to a certain extent.

Meanwhile, the configuration information associated with the model functions is configured in advance through RRC message, and the model functions are managed through MAC CE or DCI (e.g., model function activation, model function deactivation and model switching), which help to improve the efficiency of model function management.

The method embodiments of the present disclosure have been described in detail above, and apparatus embodiments of the present disclosure will be described in detail below. It is to be understood that the description of the method embodiments corresponds to the description of the apparatus embodiments. Therefore, for the portions not described in detail, the reference may be made to the method embodiments.

FIG. 3 is a structural diagram of a terminal device provided by an embodiment of the present disclosure. The terminal device 300 includes a first receiving unit 310.

The first receiving unit 310 is configured to receive first information transmitted by a network device. Here, the first information includes configuration parameters associated with a first model function, and one or more of: function identification information associated with the first model function, or one or more pieces of first identification information associated with the first model function. Here, the one or more pieces of first identification information associated with the first model function are used to assist the terminal device in controlling one or more models associated with the first model function.

In some embodiments, the device further includes a first determination unit, configured to determine a model set associated with the first model function based on the first information.

In some embodiments, the device further includes a second determination unit, configured to: upon receiving the first information, determine, in a default manner, whether to activate the first model function.

In some embodiments, the device further includes: a second receiving unit, configured to receive second information transmitted by the network device, here, the second information is used to indicate whether the terminal device is to activate the first model function upon receiving the first information.

In some embodiments, the first model function includes one or more model functions, and the device further includes: a third receiving unit, configured to receive third information transmitted by the network device, here, the third information is used to indicate any one of: activating the one or more model functions; deactivating the one or more model functions; or switching model(s) associated with the one or more model functions.

In some embodiments, the third information includes a first indication field. If a value of the first indication field is a first value, the third information is used to activate the one or more model functions or is used to switch the model(s) associated with the one or more model functions; if the value of the first indication field is a second value, the third information is used to deactivate the one or more model functions. Or, if a value of the first indication field is a first value, the third information is used to activate the one or more model functions; if the value of the first indication field is a second value, the third information is used to deactivate the one or more model function; if the value of the first indication field is a third value, the third information is used to switch the model(s) associated with the one or more model function.

In some embodiments, if the third information is used to activate the one or more model functions, the third information includes function identification information associated with the one or more model functions, or the third information includes function identification information associated with the one or more model functions and first identification information associated with the one or more model functions. Or, if the third information is used to deactivate the one or more model functions, the third information includes function identification information associated with the one or more model functions. Or, if the third information is used to switch the model(s) associated with the one or more model function, the third information includes function identifier(s) associated with the one or more model functions and first identification information associated with the one or more model functions.

In some embodiments, the first model function includes one or more model functions, and the device further includes: a fourth receiving unit, configured to receive fourth information transmitted by the network device, here, the fourth information is used to activate the one or more model functions, or the fourth information is used to switch model(s) associated with the one or more model functions.

In some embodiments, the fourth information includes a second indication field. If a value of the second indication field is a first value, the fourth information is used to activate the one or more model functions; if the value of the second indication field is a second value, the fourth information is used to switch the model(s) associated with the one or more model functions.

In some embodiments, if the fourth information is used to activate the one or more model functions, the fourth information includes function identifier(s) associated with the one or more model functions, or the fourth information includes function identifier(s) associated with the one or more model functions and first identification information associated with the one or more model functions. Or, if the fourth information is used to switch the model(s) associated with the one or more model functions, the fourth information includes function identifier(s) associated with the one or more model functions and first identification information associated with the one or more model functions.

In some embodiments, the first model function includes one or more model functions, and the device further includes: a fifth receiving unit, configured to receive fifth information transmitted by the network device, here, the fifth information is used to deactivate the one or more model functions, and the fifth information includes function identifier(s) associated with the one or more model functions.

In some embodiments, the first model function includes one or more model functions, and the device further includes: a sixth receiving unit, configured to receive sixth information transmitted by the network device, here, the sixth information includes a third indication field that includes one or more bits associated with the one or more model functions; here, if a value of the bit is a first value, the sixth information is used to activate the model function associated with the bit; if the value of the bit is a second value, the sixth information is used to deactivate the model function associated with the bit.

In some embodiments, the first model function is a model function managed by a first protocol layer of the terminal device, and the device further includes: a first delivering unit, configured to: when a second protocol layer receives information for activating the first model function, deliver the function identification information associated with the first model function to the first protocol layer, or deliver the function identification information associated with the first model function and the first identification information associated with the first model function to the first protocol layer, here, the first protocol layer is an upper protocol layer of the second protocol layer.

In some embodiments, the first model function is a model function managed by a first protocol layer of the terminal device, and the device further includes: a second delivering unit, configured to: when a second protocol layer receives information for deactivating the first model function, deliver the function identification information associated with the first model function to the first protocol layer, here, the first protocol layer is an upper protocol layer of the second protocol layer.

In some embodiments, the first model function is a model function managed by a first protocol layer of the terminal device, and the device further includes: a third delivering unit, configured to: when a second protocol layer receives information for switching the first model function, deliver the function identification information associated with the first model function and the first identification information associated with the first model function to the first protocol layer, here, the first protocol layer is an upper protocol layer of the second protocol layer.

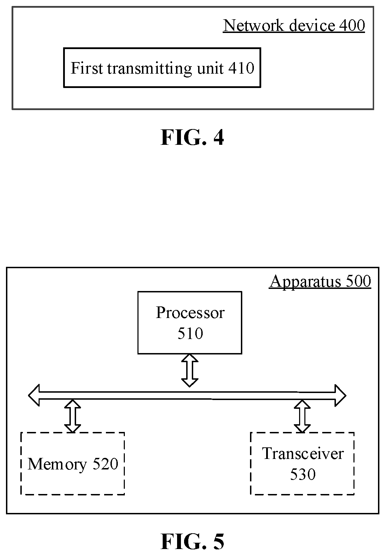

FIG. 4 is a structural diagram of a network device provided by an embodiment of the present disclosure. The network device 400 includes a first transmitting unit 410.

The first transmitting unit 410 is configured to transmit first information to a terminal device, here, the first information includes configuration parameters associated with associated with a first model function, and one or more of: function identification information associated with the first model function, or one or more pieces of first identification information associated with the first model function; here, the one or more pieces of first identification information associated with the first model function are used to assist the terminal device in controlling one or more models associated with the first model function.

In some embodiments, the device further includes: a second transmitting unit, configured to transmit second information to the terminal device, here, the second information is used to indicate whether the terminal device is to activate the first model function upon receiving the first information.

In some embodiments, the first model function includes one or more model functions, and the device further includes: a third transmitting unit, configured to transmit third information to the terminal device, here, the third information is used to indicate any one of: activating the one or more model functions; deactivating the one or more model functions; or switching model(s) associated with the one or more model functions.

In some embodiments, the third information includes a first indication field. If a value of the first indication field is a first value, the third information is used to activate the one or more model functions or is used to switch the model(s) associated with the one or more model functions; if the value of the first indication field is a second value, the third information is used to deactivate the one or more model functions. Or, if a value of the first indication field is a first value, the third information is used to activate the one or more model functions; if the value of the first indication field is a second value, the third information is used to deactivate the one or more model function; if the value of the first indication field is a third value, the third information is used to switch the model(s) associated with the one or more model function.

In some embodiments, if the third information is used to activate the one or more model functions, the third information includes function identification information associated with the one or more model functions, or the third information includes function identification information associated with the one or more model functions and first identification information associated with the one or more model functions. Or, if the third information is used to deactivate the one or more model functions, the third information includes function identification information associated with the one or more model functions. Or, if the third information is used to switch the model(s) associated with the one or more model function, the third information includes function identifier(s) associated with the one or more model functions and first identification information associated with the one or more model functions.

In some embodiments, the first model function includes one or more model functions, and the device further includes: a fourth transmitting unit, configured to transmit fourth information to the terminal device, here, the fourth information is used to activate the one or more model functions, or the fourth information is used to switch model(s) associated with the one or more model functions.

In some embodiments, the fourth information includes a second indication field. If a value of the second indication field is a first value, the fourth information is used to activate the one or more model functions; if the value of the second indication field is a second value, the fourth information is used to switch the model(s) associated with the one or more model functions.

In some embodiments, if the fourth information is used to activate the one or more model functions, the fourth information includes function identifier(s) associated with the one or more model functions, or the fourth information includes function identifier(s) associated with the one or more model functions and first identification information associated with the one or more model functions. Or, if the fourth information is used to switch the model(s) associated with the one or more model functions, the fourth information includes function identifier(s) associated with the one or more model functions and first identification information associated with the one or more model functions.

In some embodiments, the first model function includes one or more model functions, and the device further includes: a fifth transmitting unit, configured to transmit fifth information to the terminal device, here, the fifth information is used to deactivate the one or more model functions, and the fifth information includes function identifier(s) associated with the one or more model functions.

In some embodiments, the first model function includes one or more model functions, and the device further includes: a sixth transmitting unit, configured to transmit sixth information to the terminal device, here, the sixth information includes a third indication field that includes one or more bits associated with the one or more model functions; here, if a value of the bit is a first value, the sixth information is used to activate the model function associated with the bit; if the value of the bit is a second value, the sixth information is used to deactivate the model function associated with the bit.

In an alternative embodiment, the first transmitting unit to the sixth transmitting unit may be the same or different; and the first receiving unit to the sixth receiving unit may be the same or different. For example, the first transmitting unit to the sixth transmitting unit as well as the first receiving unit to the sixth receiving unit may be a transceiver 530. A communication apparatus 500 may further include a processor 510 and a memory 520, as illustrated in FIG. 5.

FIG. 5 is a structural diagram of an apparatus for communication according to an embodiment of the present disclosure. The dashed line in FIG. 5 indicates that the unit or module is optional. The apparatus 500 may be used to implement the methods described in the method embodiments described above. The apparatus 500 may be a chip, a terminal device, or a network device.

The apparatus 500 may include one or more processors 510. The processor 510 may support the apparatus 500 to implement the methods described in the method embodiments. The processor 510 may be a general purpose processor or a special purpose processor. For example, the processor may be a central processing unit (CPU). Alternatively, the processor may be another general purpose processor, a digital signal processor (DSP), an application specific integrated circuit (ASIC), a field programmable gate array (FPGA) or other programmable logic devices, a discrete gate or transistor logic device, a discrete hardware component, or the like. The general purpose processor may be a microprocessor or the processor may be any conventional processor or the like.

The apparatus 500 may also include one or more memories 520. The memory 520 stores a program that, when executed by the processor 510, causes the processor 510 to perform the methods described in the method embodiments. The memory 520 may be independent of the processor 510 or may be integrated in the processor 510.

The apparatus 500 may also include a transceiver 530. The processor 510 may communicate with other devices or chips through the transceiver 530. For example, the processor 510 may transmit/receive data to/from other devices or chips through the transceiver 530.

The embodiments of the present disclosure also provide a computer-readable storage medium for storing a program. The computer-readable storage medium can be applied to the terminal or the network device provided by the embodiments of the present disclosure, and the program causes a computer to execute the methods performed by the terminal or the network device in various embodiments of the present disclosure.

The embodiments of the present disclosure also provide a computer program product. The computer program product includes a program. The computer program product can be applied to the terminal or the network device provided by the embodiments of the present disclosure, and the program causes a computer to execute the methods performed by the terminal or the network device in various embodiments of the present disclosure.

The embodiments of the present disclosure also provide a computer program. The computer program may be applied to the terminal or the network device provided by the embodiments of the present disclosure, and the computer program causes a computer to execute the methods performed by the terminal or the network device in various embodiments of the present disclosure.

It is to be understood that the terms "system" and "network" may be used interchangeably in the present disclosure. In addition, the terminology used in the present disclosure is only used to explain specific embodiments of the present disclosure, and is not intended to limit the present disclosure. The terms "first," "second," "third," and "fourth," and the like in the specification and claims of the present disclosure and the accompanying drawings are used to distinguish different objects and are not used to describe a particular order. Furthermore, the terms "comprising/including" and "having" and any variations thereof are intended to cover a non-exclusive inclusion.

In the embodiments of the present disclosure, the "indication" may be a direct indication, an indirect indication, or mean that there is an association relationship. By way of example, A indicates B, which may mean that A directly indicates B, e.g., B may be obtained through A; or may mean that A indirectly indicates B, for example, A indicates C, and B can be obtained through C; or may mean that there is an association relationship between A and B.

In the embodiments of the present disclosure, "B corresponding to A" means that B is associated with A, and B can be determined from A. However, it should also be understood that determining B from A does not mean determining B from A alone, but B may also be determined from A and/or other information.

In the embodiments of the present disclosure, the term "correspondence" may mean that there is a direct correspondence or an indirect correspondence between the two, or may mean that there is an association relationship between the two, or may be a relationship between indicating and being indicated, configuring and being configured, or the like.

In the embodiments of the present disclosure, "pre-definition" or "pre-configuration" can be realized by pre-storing corresponding codes, tables, or other ways that can be used to indicate relevant information in a device (for example, including a terminal device and a network device), and the specific implementation method thereof is not limited in the present disclosure. For example, pre-definition may refer to being defined in a protocol.

In the embodiments of the present disclosure, the "protocol" may refer to a standard protocol in the communication field, and may include, for example, an LTE protocol, an NR protocol, and/or related protocols applied to future communication systems, and the present disclosure is not limited thereto.

The term "and/or" in the embodiments of the present disclosure merely describes an association relationship between the associated objects, indicating that there may be three kinds of relationships, for example, A and/or B, which may mean that A exists alone, A and B exists at the same time, and B exists alone. In addition, the character "/" herein generally indicates that the associated objects before and after the character "/" are in an "or" relationship.

In the embodiments of the present disclosure, "including/comprising" may refer to directly including/comprising or indirectly including/comprising. Alternatively, reference to "including/comprising" in embodiments of the present disclosure may be replaced with "indicating" or "for determining". For example, A includes B, which may be replaced by A indicating B, or A is used to determine B.

In various embodiments of the present disclosure, the size of the sequence numbers of the above-described processes does not mean the execution order, and the execution order of each process should be determined by its function and internal logic, and should not constitute any limitation on the implementation process of the embodiments of the present disclosure.

In the several embodiments provided in the present disclosure, it should be understood that the disclosed systems, apparatuses, and methods may be implemented in other ways. For example, the device embodiments described above are merely illustrative. For example, the division of units is merely a logical function division, and there may be other division methods in actual implementation. For example, multiple units or components may be combined or integrated into another system, or some features may be ignored or not executed. In addition, the couplings or direct couplings or communication connections with each other shown or discussed may be indirect couplings or communication connections through some interfaces, devices or units, and may be in electrical, mechanical or other forms.

The units described as separate components may or may not be physically separated, and the components shown as units may or may not be physical units, i.e., may be located in one place, or may be distributed over multiple network units. Some or all of the units may be selected according to actual needs to achieve the purpose of the solutions of the present embodiments.

In addition, various functional units in each embodiment of the present disclosure may be integrated in one processing unit, or each unit may physically exist alone, or two or more units may be integrated in one unit.

In the above-described embodiments, it may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed on a computer, processes or functions according to embodiments of the present disclosure are generated in whole or in part. The computer may be a general purpose computer, a special purpose computer, a computer network, or another programmable device. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center via a wired connection (e.g., coaxial cable, fiber optic, digital subscriber line (DSL)) or a wireless connection (e.g., infrared, wireless, microwave). The computer-readable storage medium may be any available medium that can be read by a computer or a data storage device such as a server, a data center, or the like that integrates one or more available media. The available medium may be a magnetic medium (e.g., a floppy disk, a hard disk, a magnetic tape), an optical medium (e.g., a digital video disc (DVD)), or a semiconductor medium (e.g., a solid state disk (SSD)), or the like.

The above descriptions are merely specific implementations of the present disclosure, but the protection scope of the present disclosure is not limited thereto. Any person skilled in the art may readily conceive of variations or substitutions within the technical scope disclosed in the present disclosure, and such variations or substitutions shall all fall within the protection scope of the present disclosure. Therefore, the protection scope of the present disclosure shall be subject to the protection scope of the claims.

## Claims

1. A wireless communication method, comprising:
receiving, by a terminal device, first information transmitted by a network device, the first information comprising configuration parameters associated with a first model function, and one or more of: function identification information associated with the first model function, or one or more pieces of first identification information associated with the first model function;
wherein the one or more pieces of first identification information associated with the first model function are used to assist the terminal device in controlling one or more models associated with the first model function.

2. The method of claim 1, further comprising:
determining, by the terminal device, a model set associated with the first model function based on the first information.

3. The method of claim 1 or 2, further comprising:
upon receiving the first information, determining, by the terminal device, in a default manner, whether to activate the first model function.

4. The method of claim 1 or 2, further comprising:
receiving, by the terminal device, second information transmitted by the network device, the second information being used to indicate whether the terminal device is to activate the first model function.

5. The method of any one of claims 1 to 4, wherein the first model function comprises one or more model functions, and the method further comprises:
receiving, by the terminal device, third information transmitted by the network device, the third information is used to indicate any one of:
activating the one or more model functions;
deactivating the one or more model functions; or
switching model(s) associated with the one or more model functions.

6. The method of claim 5, wherein the third information comprises a first indication field, wherein
if a value of the first indication field is a first value, the third information is used to activate the one or more model functions or is used to switch the model(s) associated with the one or more model functions; if the value of the first indication field is a second value, the third information is used to deactivate the one or more model functions; or
if a value of the first indication field is a first value, the third information is used to activate the one or more model functions; if the value of the first indication field is a second value, the third information is used to deactivate the one or more model function; if the value of the first indication field is a third value, the third information is used to switch the model(s) associated with the one or more model function.

7. The method of claim 5 or 6, wherein
if the third information is used to activate the one or more model functions, the third information comprises function identification information associated with the one or more model functions, or the third information comprises function identification information associated with the one or more model functions and first identification information associated with the one or more model functions; or
if the third information is used to deactivate the one or more model functions, the third information comprises function identification information associated with the one or more model functions; or
if the third information is used to switch the model(s) associated with the one or more model function, the third information comprises function identification information associated with the one or more model functions and first identification information associated with the one or more model functions.

8. The method of any one of claims 1 to 4, wherein the first model function comprises one or more model functions, and the method further comprises:
receiving, by the terminal device, fourth information transmitted by the network device, the fourth information being used to activate the one or more model functions, or the fourth information being used to switch model(s) associated with the one or more model functions.

9. The method of claim 8, wherein the fourth information comprises a second indication field, wherein
if a value of the second indication field is a first value, the fourth information is used to activate the one or more model functions; if the value of the second indication field is a second value, the fourth information is used to switch the model(s) associated with the one or more model functions.

10. The method of claim 8 or 9, wherein
if the fourth information is used to activate the one or more model functions, the fourth information comprises function identification information associated with the one or more model functions, or the fourth information comprises function identification information associated with the one or more model functions and first identification information associated with the one or more model functions; or
if the fourth information is used to switch the model(s) associated with the one or more model functions, the fourth information comprises function identification information associated with the one or more model functions and first identification information associated with the one or more model functions.

11. The method of any one of claims 1 to 4 and 8 to 10, wherein the first model function comprises one or more model functions, and the method further comprises:
receiving, by the terminal device, fifth information transmitted by the network device, the fifth information being used to deactivate the one or more model functions;
wherein the fifth information comprises function identification information associated with the one or more model functions.

12. The method of any one of claims 1 to 4, wherein the first model function comprises one or more model functions, and the method further comprises:
receiving, by the terminal device, sixth information transmitted by the network device, the sixth information comprising a third indication field that comprises one or more bits associated with the one or more model functions;
wherein if a value of the bit is a first value, the sixth information is used to activate the model function associated with the bit; if the value of the bit is a second value, the sixth information is used to deactivate the model function associated with the bit.

13. The method of any one of claims 1 to 12, wherein the first model function is a model function managed by a first protocol layer of the terminal device, and the method further comprises:
when a second protocol layer receives information for activating the first model function, delivering, by the terminal device, the function identification information associated with the first model function to the first protocol layer, or delivering, by the terminal device, the function identification information associated with the first model function and the first identification information associated with the first model function to the first protocol layer,
wherein the first protocol layer is an upper protocol layer of the second protocol layer.

14. The method of any one of claims 1 to 13, wherein the first model function is a model function managed by a first protocol layer of the terminal device, and the method further comprises:
when a second protocol layer receives information for deactivating the first model function, delivering, by the terminal device, the function identification information associated with the first model function to the first protocol layer,
wherein the first protocol layer is an upper protocol layer of the second protocol layer.

15. The method of any one of claims 1 to 14, wherein the first model function is a model function managed by a first protocol layer of the terminal device, and the method further comprises:
when a second protocol layer receives information for switching the first model function, delivering, by the terminal device, the function identification information associated with the first model function and the first identification information associated with the first model function to the first protocol layer,
wherein the first protocol layer is an upper protocol layer of the second protocol layer.

16. A wireless communication method, comprising:
transmitting, by a network device, first information to a terminal device, the first information comprising configuration parameters associated with a first model function, and one or more of: function identification information associated with the first model function, or one or more pieces of first identification information associated with the first model function;
wherein the one or more pieces of first identification information associated with the first model function are used to assist the terminal device in controlling one or more models associated with the first model function.

17. The method of claim 16, further comprising:
transmitting, by the network device, second information to the terminal device, the second information being used to indicate whether the terminal device is to activate the first model function.

18. The method of claim 16 or 17, wherein the first model function comprises one or more model functions, and the method further comprises:
transmitting, by the network device, third information to the terminal device, the third information being used to indicate any one of:
activating the one or more model functions;
deactivating the one or more model functions; or
switching model(s) associated with the one or more model functions.

19. The method of claim 18, wherein the third information comprises a first indication field, wherein
if a value of the first indication field is a first value, the third information is used to activate the one or more model functions or is used to switch the model(s) associated with the one or more model functions; if the value of the first indication field is a second value, the third information is used to deactivate the one or more model functions; or
if a value of the first indication field is a first value, the third information is used to activate the one or more model functions; if the value of the first indication field is a second value, the third information is used to deactivate the one or more model function; if the value of the first indication field is a third value, the third information is used to switch the model(s) associated with the one or more model function.

20. The method of claim 18 or 19, wherein,
if the third information is used to activate the one or more model functions, the third information comprises function identification information associated with the one or more model functions, or the third information comprises function identification information associated with the one or more model functions and first identification information associated with the one or more model functions; or
if the third information is used to deactivate the one or more model functions, the third information comprises function identification information associated with the one or more model functions; or
if the third information is used to switch the model(s) associated with the one or more model function, the third information comprises function identification information associated with the one or more model functions and first identification information associated with the one or more model functions.

21. The method of claim 16 or 17, wherein the first model function comprises one or more model functions, and the method further comprises:
transmitting, by the network device, fourth information to the terminal device, the fourth information being used to activate the one or more model functions, or the fourth information being used to switch model(s) associated with the one or more model functions.

22. The method of claim 21, wherein the fourth information comprises a second indication field, wherein
if a value of the second indication field is a first value, the fourth information is used to activate the one or more model functions; if the value of the second indication field is a second value, the fourth information is used to switch the model(s) associated with the one or more model functions.

23. The method of claim 21 or 22, wherein
if the fourth information is used to activate the one or more model functions, the fourth information comprises function identification information associated with the one or more model functions, or the fourth information comprises function identification information associated with the one or more model functions and first identification information associated with the one or more model functions; or
if the fourth information is used to switch the model(s) associated with the one or more model functions, the fourth information comprises function identification information associated with the one or more model functions and first identification information associated with the one or more model functions.

24. The method of any one of claims 16, 17, and 21 to 23, wherein the first model function comprises one or more model functions, and the method further comprises:
transmitting, by the network device, fifth information to the terminal device, the fifth information being used to deactivate the one or more model functions;
wherein the fifth information comprises function identification information associated with the one or more model functions.

25. The method of claim 16 or 17, wherein the first model function comprises one or more model functions, and the method further comprises:
transmitting, by the network device, sixth information to the terminal device, the sixth information comprising a third indication field that comprises one or more bits associated with the one or more model functions;
wherein if a value of the bit is a first value, the sixth information is used to activate the model function associated with the bit; if the value of the bit is a second value, the sixth information is used to deactivate the model function associated with the bit.

26. A terminal device, comprising:
a first receiving unit, configured to receive first information transmitted by a network device, the first information comprising configuration parameters associated with a first model function, and one or more of: function identification information associated with the first model function, or one or more pieces of first identification information associated with the first model function;
wherein the one or more pieces of first identification information associated with the first model function are used to assist the terminal device in controlling one or more models associated with the first model function.

27. The device of claim 26, further comprising:
a first determination unit, configured to determine a model set associated with the first model function based on the first information.

28. The device of claim 26 or 27, further comprising:
a second determination unit, configured to: upon receiving the first information, determine, in a default manner, whether to activate the first model function.

29. The device of claim 26 or 27, further comprising:
a second receiving unit, configured to receive second information transmitted by the network device, the second information being used to indicate whether the terminal device is to activate the first model function upon receiving the first information.

30. The device of any one of claims 26 to 29, wherein the first model function comprises one or more model functions, and the device further comprises:
a third receiving unit, configured to receive third information transmitted by the network device, the third information being used to indicate any one of:
activating the one or more model functions;
deactivating the one or more model functions; or
switching model(s) associated with the one or more model functions.

31. The device of claim 30, wherein the third information comprises a first indication field, wherein
if a value of the first indication field is a first value, the third information is used to activate the one or more model functions or is used to switch the model(s) associated with the one or more model functions; if the value of the first indication field is a second value, the third information is used to deactivate the one or more model functions; or
if a value of the first indication field is a first value, the third information is used to activate the one or more model functions; if the value of the first indication field is a second value, the third information is used to deactivate the one or more model function; if the value of the first indication field is a third value, the third information is used to switch the model(s) associated with the one or more model function.

32. The device of claim 30 or 31, wherein
if the third information is used to activate the one or more model functions, the third information comprises function identification information associated with the one or more model functions, or the third information comprises function identification information associated with the one or more model functions and first identification information associated with the one or more model functions; or
if the third information is used to deactivate the one or more model functions, the third information comprises function identification information associated with the one or more model functions; or
if the third information is used to switch the model(s) associated with the one or more model function, the third information comprises function identification information associated with the one or more model functions and first identification information associated with the one or more model functions.

33. The device of any one of claims 26 to 29, wherein the first model function comprises one or more model functions, and the device further comprises:
a fourth receiving unit, configured to receive fourth information transmitted by the network device, the fourth information being used to activate the one or more model functions, or the fourth information being used to switch model(s) associated with the one or more model functions.

34. The device of claim 33, wherein the fourth information comprises a second indication field, wherein
if a value of the second indication field is a first value, the fourth information is used to activate the one or more model functions; if the value of the second indication field is a second value, the fourth information is used to switch the model(s) associated with the one or more model functions.

35. The device of claim 33 or 34, wherein
if the fourth information is used to activate the one or more model functions, the fourth information comprises function identification information associated with the one or more model functions, or the fourth information comprises function identification information associated with the one or more model functions and first identification information associated with the one or more model functions; or
if the fourth information is used to switch the model(s) associated with the one or more model functions, the fourth information comprises function identification information associated with the one or more model functions and first identification information associated with the one or more model functions.

36. The device of any one of claims 26 to 29 and 33 to 35, wherein the first model function comprises one or more model functions, and the device further comprises:
a fifth receiving unit, configured to receive fifth information transmitted by the network device, the fifth information being used to deactivate the one or more model functions;
wherein the fifth information comprises function identification information associated with the one or more model functions.

37. The device of any one of claims 26 to 29, wherein the first model function comprises one or more model functions, and the device further comprises:
a sixth receiving unit, configured to receive sixth information transmitted by the network device, the sixth information comprising a third indication field that comprises one or more bits associated with the one or more model functions;
wherein if a value of the bit is a first value, the sixth information is used to activate the model function associated with the bit; if the value of the bit is a second value, the sixth information is used to deactivate the model function associated with the bit.

38. The device of any one of claims 26 to 37, wherein the first model function is a model function managed by a first protocol layer of the terminal device, and the device further comprises:
a first delivering unit, configured to: when a second protocol layer receives information for activating the first model function, deliver the function identification information associated with the first model function to the first protocol layer, or deliver the function identification information associated with the first model function and the first identification information associated with the first model function to the first protocol layer,
wherein the first protocol layer is an upper protocol layer of the second protocol layer.

39. The device of any one of claims 26 to 38, wherein the first model function is a model function managed by a first protocol layer of the terminal device, and the device further comprises:
a second delivering unit, configured to: when a second protocol layer receives information for deactivating the first model function, deliver the function identification information associated with the first model function to the first protocol layer,
wherein the first protocol layer is an upper protocol layer of the second protocol layer.

40. The device of any one of claims 26 to 39, wherein the first model function is a model function managed by a first protocol layer of the terminal device, and the device further comprises:
a third delivering unit, configured to: when a second protocol layer receives information for switching the first model function, deliver the function identification information associated with the first model function and the first identification information associated with the first model function to the first protocol layer,
wherein the first protocol layer is an upper protocol layer of the second protocol layer.

41. A network device, comprising:
a first transmitting unit, configured to transmit first information to a terminal device, the first information comprising configuration parameters associated with a first model function, and one or more of: function identification information associated with the first model function, or one or more pieces of first identification information associated with the first model function;
wherein the one or more pieces of first identification information associated with the first model function are used to assist the terminal device in controlling one or more models associated with the first model function.

42. The device of claim 41, further comprising:
a second transmitting unit, configured to transmit second information to the terminal device, the second information being used to indicate whether the terminal device is to activate the first model function upon receiving the first information.

43. The device of claim 41 or 42, wherein the first model function comprises one or more model functions, and the device further comprises:
a third transmitting unit, configured to transmit third information to the terminal device, the third information being used to indicate any one of:
activating the one or more model functions;
deactivating the one or more model functions; or
switching model(s) associated with the one or more model functions.

44. The device of claim 43, wherein the third information comprises a first indication field, wherein
if a value of the first indication field is a first value, the third information is used to activate the one or more model functions or is used to switch the model(s) associated with the one or more model functions; if the value of the first indication field is a second value, the third information is used to deactivate the one or more model functions; or
if a value of the first indication field is a first value, the third information is used to activate the one or more model functions; if the value of the first indication field is a second value, the third information is used to deactivate the one or more model function; if the value of the first indication field is a third value, the third information is used to switch the model(s) associated with the one or more model function.

45. The device of claim 43 or 44, wherein
if the third information is used to activate the one or more model functions, the third information comprises function identification information associated with the one or more model functions, or the third information comprises function identification information associated with the one or more model functions and first identification information associated with the one or more model functions; or
if the third information is used to deactivate the one or more model functions, the third information comprises function identification information associated with the one or more model functions; or
if the third information is used to switch the model(s) associated with the one or more model function, the third information comprises function identification information associated with the one or more model functions and first identification information associated with the one or more model functions.

46. The device of claim 41 or 42, wherein the first model function comprises one or more model functions, and the device further comprises:
a fourth transmitting unit, configured to transmit fourth information to the terminal device, the fourth information being used to activate the one or more model functions, or the fourth information being used to switch model(s) associated with the one or more model functions.

47. The device of claim 46, wherein the fourth information comprises a second indication field, wherein
if a value of the second indication field is a first value, the fourth information is used to activate the one or more model functions; if the value of the second indication field is a second value, the fourth information is used to switch the model(s) associated with the one or more model functions.

48. The device of claim 46 or 47, wherein
if the fourth information is used to activate the one or more model functions, the fourth information comprises function identification information associated with the one or more model functions, or the fourth information comprises function identification information associated with the one or more model functions and first identification information associated with the one or more model functions; or
if the fourth information is used to switch the model(s) associated with the one or more model functions, the fourth information comprises function identification information associated with the one or more model functions and first identification information associated with the one or more model functions.

49. The device of any one of claims 41, 42, and 46 to 48, wherein the first model function comprises one or more model functions, and the device further comprises:
a fifth transmitting unit, configured to transmit fifth information to the terminal device, the fifth information being used to deactivate the one or more model functions;
wherein the fifth information comprises function identification information associated with the one or more model functions.

50. The device of claim 41 or 42, wherein the first model function comprises one or more model functions, and the device further comprises:
a sixth transmitting unit, configured to transmit sixth information to the terminal device, the sixth information comprising a third indication field that comprises one or more bits associated with the one or more model functions;
wherein if a value of the bit is a first value, the sixth information is used to activate the model function associated with the bit; if the value of the bit is a second value, the sixth information is used to deactivate the model function associated with the bit.

51. A terminal device, comprising a processor configured to call a program from a memory to perform the method of any one of claims 1 to 15.

52. A network device, comprising a processor configured to call a program from a memory to perform the method of any one of claims 16 to 25.

53. A chip, comprising a processor configured to call a program from a memory to cause a device equipped with the chip to perform the method of any one of claims 1 to 15 or 16 to 25.

54. A computer-readable storage medium having stored thereon a program that causes a computer to perform the method of any one of claims 1 to 15 or 16 to 25.

55. A computer program product, comprising a program that causes a computer to perform the method of any one of claims 1 to 15 or 16 to 25.

56. A computer program for causing a computer to perform the method of any one of claims 1 to 15 or 16 to 25.
